Europäisches Patentamt

European Patent Office

Office européen des brevets

(11) Numéro de publication : **0 450 992 B1**

# (12) FASCICULE DE BREVET EUROPEEN

(45) Date de publication du fascicule du brevet :
**13.07.94 Bulletin 94/28**

(51) Int. Cl.⁵ : **G01T 1/00, G01T 1/24**

(21) Numéro de dépôt : **91400397.5**

(22) Date de dépôt : **15.02.91**

(54) **Dispositif de détection de rayonnements dangereux pour les êtres vivants.**

(30) Priorité : **06.04.90 FR 9004456**

(43) Date de publication de la demande :
**09.10.91 Bulletin 91/41**

(45) Mention de la délivrance du brevet :
**13.07.94 Bulletin 94/28**

(84) Etats contractants désignés :
**AT BE CH DE FR GB IT LI SE**

(56) Documents cités :
**EP-A- 0 051 520
EP-A- 0 300 054
US-A- 4 608 655**

(73) Titulaire : **THOMSON-CSF
173, Boulevard Haussmann
F-75008 Paris (FR)**

(72) Inventeur : **Lacoste, Francis
THOMSON-CSF,
SCPI,
B.P.329
50, rue J.-P. Timbaud
F-92402 Courbevoie Cédex (FR)**
Inventeur : **Lucas, Marc
THOMSON-CSF,
SCPI,
B.P.329
50, rue J.-P. Timbaud
F-92402 Courbevoie Cédex (FR)**

(74) Mandataire : **Grynwald, Albert et al
THOMSON-CSF,
SCPI,
B.P. 329,
50, rue Jean-Pierre Timbaud
F-92402 Courbevoie Cédex (FR)**

EP 0 450 992 B1

## Description

L'invention est relative à un dispositif de détection de rayonnements dangereux pour les êtres vivants, notamment pour les humains, et dont les effets s'accumulent au cours du temps.

On sait que les rayonnements gamma produits dans les centrales nucléaires sont particulièrement dangereux. Les normes imposent que chaque personne ne reçoive au cours de son existence qu'une quantité de rayonnement inférieure à une limite déterminée, exprimée en millirems.

De même les radiologistes et les manipulateurs d'appareils à rayons X sont exposés à des doses de rayonnements dont l'accumulation peut être dangereuse. Là aussi les normes imposent que chaque individu au cours de son existence ne reçoive pas une dose supérieure à une limite préfixée.

Il existe d'autres rayonnements, tel que le rayonnement ultraviolet ou des rayonnements de particules chargées, dont l'accumulation de doses d'exposition pendant un temps donné peut présenter un danger.

Pour les personnes susceptibles d'être soumises au rayonnement gamma, on prévoit des procédures de contrôle de doses de rayonnement reçues. Ces procédures consistent à faire porter aux individus un dispositif d'enregistrement des doses reçues.

Ces dispositifs sont jusqu'à présent de deux types : le premier est un film photographique porté par chaque personne susceptible de recevoir des rayonnements dangereux. L'inconvénient d'un tel dispositif est que le film ne fournit pas d'informations immédiates à son porteur et que ce type de détection impose une gestion relativement complexe des informations sur les doses reçues. De plus le film ne donne une indication que sur la dose cumulée pendant un temps déterminé, en général de l'ordre du mois et l'information qui est, ensuite, fournie à l'utilisateur est très sommaire : il sait seulement si la dose reçue dépasse ou ne dépasse pas le seuil admissible.

Le second type de dispositif se présente sous la forme d'un boîtier encombrant logeant : un détecteur de rayonnement, des circuits de mémorisation de la dose accumulée, une alarme qui se déclenche quand le débit de dose dépasse une limite admissible, un affichage de doses accumulées pendant le port de l'appareil et des moyens de connexion vers des circuits extérieurs.

Les dispositifs du second type sont affectés globalement à l'installation dans laquelle peuvent se produire des rayonnements dangereux. Ils sont habituellement disposés dans un râtelier permettant la charge de leur batterie. Pour entrer dans l'installation une personne doit utiliser un "badge" d'identification qui lui donne accès au râtelier porteur des dispositifs et à ce moment, dans le râtelier, un signal lui indique le dispositif qui lui est affecté. Un système de gestion centralisée connaît ainsi la relation entre le porteur et le dispositif.

Quand le porteur quitte l'installation il remet le dispositif dans le râtelier et, à ce moment, les doses accumulées sont transmises à un centre de gestion grâce au connecteur sur le dispositif.

Ce dispositif est encombrant et impose une gestion presque aussi lourde que dans le cas du film. Il permet à la personne concernée de connaître seulement la dose accumulée pendant le port du dispositif, c'est-à-dire pendant quelques heures.

Par ailleurs pour la mesure de doses de rayonnements reçues par une personne on a proposé (EP 300 054) un dispositif portable destiné à enregistrer le rayonnement reçu par une personne sur une longue période. Mais l'appareil décrit dans ce document est relativement encombrant ce qui peut dissuader l'utilisateur de le porter en permanence. En outre, la mise en mémoire de données sur une longue durée est effectuée dans une mémoire permanente amovible. L'amovibilité constitue également un facteur d'insécurité car si l'utilisateur oublie d'insérer la mémoire le dispositif n'enregistre pas en principe les doses reçues.

Dans le brevet US 4 608 655 est décrit un dosimètre de rayonnements reçus par les personnes travaillant dans l'industrie nucléaire qui se présente sous la forme d'une montre-bracelet qui est portée en permanence. Mais ce dosimètre étant porté à l'extrémité d'un membre, il mesure les doses reçues à cet endroit et non dans le corps entier, notamment au niveau du tronc. En outre le dosimètre décrit dans ce document n'effectue qu'un nombre limité d'opérations.

L'invention remédie aux inconvénients mentionnés ci-dessus, en proposant un dispositif tel que défini dans les revendications 1 et 16.

Le dispositif selon l'invention comprend un capteur de rayonnements ou particules, un moyen de calcul de la dose accumulée et une mémoire pour stocker des données relatives au porteur et les doses accumulées. Il est caractérisé en ce que tous ses éléments constitutifs sont logés dans un boîtier plat d'un seul tenant et en forme et dimensions de carte de crédit rectangulaire.

Un tel dosimètre en forme de carte de crédit de dimensions normalisées sera la plupart du temps, de façon naturelle, disposé dans le portefeuille du porteur, habituellement dans une poche au voisinage de la partie supérieure du tronc ou de la taille de la personne. Autrement dit la configuration du dispositif de l'invention est telle qu'elle permet de maximiser le probabilité pour, d'une part, qu'il soit porté en permanence et, d'autre part, qu'il effectue une mesure représentative de la dose reçue par l'ensemble du corps.

L'identification permanente du porteur permet de faciliter la gestion, car il n'est pas indispensable de transmettre les données collectées par le dispositif vers un centre de traitement de l'information. Si le porteur est une personne cette dernière peut vérifier par elle-même la dose totale de rayonnement qu'elle a accumulée. En outre, du fait de l'identification, l'accumulation se fait sur une grande période. Le dispositif peut même être porté par l'individu tout au long de son existence.

Les informations sur l'identité du porteur que contient le dispositif peuvent être utilisées à d'autres fins que le contrôle de la dose accumulée. Parmi ces autres utilisations on peut citer le paiement de prestations ou le contrôle d'accès à un lieu donné. De cette manière l'incitation au port permanent du dispositif est renforcée.

La personnalisation du dispositif peut être accentuée par l'apposition ou l'impression du nom et/ou de la photographie du porteur. Dans ce cas le dispositif peut en outre être utilisé comme un badge d'identification qu'on porte de façon apparente classiquement en pochette, c'est-à-dire sur la poitrine du côté gauche ou du côté droit, ou avec un collier, ou encore à la ceinture. Tous ces emplacement sont favorables à une mesure correcte de la dose accumulée.

Bien que le dispositif de l'invention permette de limiter les interventions d'un centre de gestion, ces dernières peuvent rester nécessaires, notamment pour les contrôles. C'est pourquoi, dans un mode de réalisation, on prévoit des moyens de connexion du dispositif à un appareil de traitement de l'information tel qu'un ordinateur. Ces moyens de connexion comprennent une antenne, par exemple une étiquette radio qui est constituée par une antenne d'émission-réception plate, de petites dimensions, et qui peut donc être intégrée dans le dispositif ayant le format d'une carte de crédit. Dans ce cas la sécurité d'utilisation du dispositif est encore renforcée car la liaison avec un appareil de traitement de l'information ou un appareil analogue peut s'effectuer de façon automatique sans que l'utilisateur ait à intervenir et sans même qu'il s'en rende compte, alors qu'avec les dispositifs de l'art antérieur l'utilisateur avait à déplacer un élément, notamment pour le brancher ou le débrancher. En outre la liaison avec un centre de traitement ou un appareil donneur d'ordre s'effectue en temps réel.

Pour que l'utilisateur puisse avoir accès aux informations contenues dans la mémoire du dispositif on prévoit avantageusement une ou plusieurs touches permettant l'interrogation ainsi qu'un écran d'affichage.

Selon un autre aspect de l'invention on prévoit dans un dispositif portatif de mesure du débit le doses et de doses du rayonnement photonique, gamma, UV ou X ou de particules chargées auquel est soumis un porteur, un capteur de rayonnement ou particules, un moyen de calcul de la dose accumulée et une mémoire pour stocker des données relatives au porteur et les doses accumulées qui est caractérisé en ce qu'il comprend une horloge-calendrier pour stocker dans la mémoire une information de date (jour, semaine, mois, année) en même temps que les informations de doses et/ou de débit de doses. Cette caractéristique permet l'autonomie du dispositif puisqu'avec cette information de date la gestion les informations peut être effectuée sur une longue période, alors que dans les dispositifs antérieurement connus, la gestion est effectuée à l'aide d'un système extérieur au dispositif portable. Cette caractéristique s'utilise de préférence avec le premier aspect de l'invention. Toutefois elle peut s'utiliser indépendamment, c'est-à- dire qu'il n'est alors pas indispensable que le dispositif ait un format de carte de crédit.

Il est particulièrement avantageux, pour permettre que la mémoire du dispositif soit de faible capacité et donc de faible encombrement et de faible coût, que les données en mémoire soient en permanence ou périodiquement remises à jour à l'aide d'un microcontrôleur et de l'horloge-calendrier de façon que ne soient conservées en mémoire que des informations de doses cumulées sur des périodes d'autant plus longues qu'elles sont plus anciennes. Par exemple la mémoire ne retiendra que les données suivantes : les doses accumulées chacun des sept derniers jours; pour les semaines antérieures les doses accumulées pour chacune des trois semaines précédentes (pour les semaines antérieures on efface de la mémoire les doses comptabilisées jour par jour); pour les mois écoulés, les doses accumulées pour chacun des trois derniers mois précédents; et pour le reste de l'année en cours, les doses accumulées les trois trimestres qui précèdent. Enfin pour les années antérieures on ne retiendra dans la mémoire que la dose accumulée pour chaque année.

On voit qu'on peut ainsi utiliser une mémoire de quelques kilobits, alors qu'avec les dispositifs antérieurement connus il fallait des mémoires de capacités nettement plus importantes. Par exemple dans le brevet européen 300 054 on accumule dans une mémoire portable les doses journalières qui restent inscrites en permanence dans cette mémoire, ce qui nécessite - comme décrit dans ce document - une capacité de 0,5 mégabit; si la mémorisation d'une dose journalière occupe, par le couple date-dose, Nbits en mémoire, la mémorisation sur dix années nécessitera 3650 x Nbits. Avec l'invention, dans le cas de l'exemple indiqué ci-dessus, pour dix ans il faudra environ $(7 + 3 + 3 + 3 + 9)N = 25$ Nbits.

La gestion des informations conservées en mémoire permet d'autres fonctions. Par exemple on peut déterminer en permanence la dose accumulée pendant les treize dernières semaines et actionner une alarme si la dose accumulée sur ces treize semaines précédentes dépasse le maximum autorisé de trois rems.

A titre d'exemple encore le dispositif peut être utilisé pour déterminer la dose accumulée par un porteur dans un site déterminé pendant une période déterminée.

Bien que l'application préférée du dispositif soit la détection de l'accumulation de doses de rayonnement reçues par une personne, dans une autre réalisation le dispositif est affecté à un objet ou à un lieu. De façon plus précise dans ces variantes, le dispositif comporte une identification de l'objet ou du lieu auquel il est affecté. Par exemple si l'objet est un conteneur de substances radioactives, ou émettrices de rayonnements X, UV, ou de particules chargées, le dispositif permet de déterminer les doses émises vers l'extérieur par ce conteneur. Dans un autre exemple le dispositif est fixé à demeure dans un lieu déterminé afin de mesurer l'accumulation de doses reçues en ce lieu. Dans ce dernier cas on peut disposer plusieurs dispositifs dans le lieu à étudier afin, notamment, de déterminer point par point l'exposition au rayonnement dans ce lieu en fonction de la date.

Dans une autre variante, le dispositif détecte l'accumulation des rayonnements ultraviolets par une personne. Il peut alors être utilisé notamment pour que le porteur détermine le temps journalier maximum d'exposition au soleil qui permet d'éviter les brûlures dites "coups de soleil". Ce temps journalier maximum est déterminé par le dispositif en fonction de caractéristiques du porteur qu'il contient en mémoire : âge, pigmentation de la peau et expositions antérieures.

Selon encore un autre de ses aspects l'invention se rapporte de façon générale à un dispositif, de préférence portable, d'accumulation de données qui comprend un moyen de calcul et une mémoire de stockage des données qui est caractérisé en ce qu'il comprend une horloge-calendrier pour stocker dans la mémoire une information de date en même temps que les données et un contrôleur ou microcontrôleur pour que les cumuls soient en permanence ou périodiquement remis à jour de façon que ne soit conservée en mémoire que des cumuls sur des périodes d'autant plus longues qu'elles sont plus anciennes.

D'autres caractéristiques et avantages de l'invention apparaîtront avec la description de certains de ses modes de réalisation, celle-ci étant effectuée en se référant aux dessins ci-annexés sur lesquels :

- la figure 1 est une vue de la face principale du dispositif de l'invention,
- la figure 2 est un schéma des circuits du dispositif de la figure 1, et
- la figure 3 est un schéma d'organisation de mémoire dans les circuits de la figure 2.

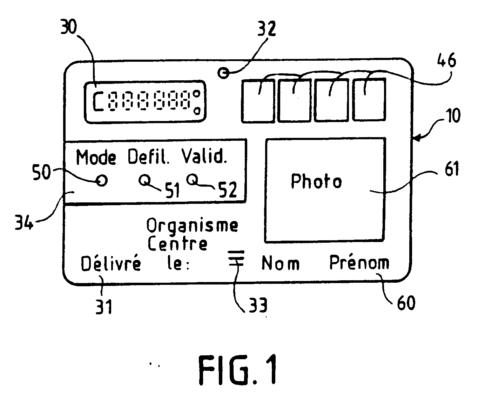

L'exemple qu'on va décrire en relation avec les figures est un dispositif portable par une personne se présentant sous la forme d'une carte 10 (figure 1) du format normalisé d'une carte de crédit. Il permet la mesure individuelle d'exposition (dose et débit de dose) à des rayonnements photoniques de type gamma, ultraviolet (UV) ou X, ou à des particules chargées. L'exemple principal est ici la détection de rayons gamma.

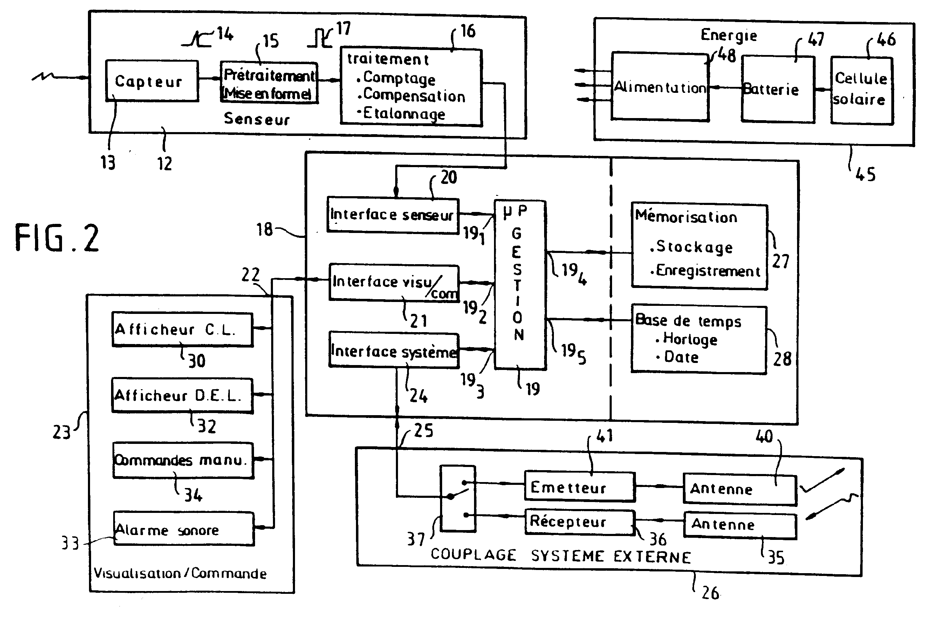

La figure 2 est un schéma par blocs des divers éléments et fonctions qu'on trouve à l'intérieur du dispositif 10.

Ce dispositif 10 comprend une partie 12 de détection avec un capteur 13 à état solide destiné à détecter le rayonnement incident dont les effets cumulés peuvent être dangereux pour les personnes. Le capteur 13 est un élément semiconducteur de petites dimensions lui permettant l'être logé dans la carte plate 10. Son but est de fournir des impulsions 14 dont le nombre est proportionnel au flux de particules photoniques incidentes.

Les impulsions 14 alimentent un circuit de traitement 16 par l'intermédiaire d'un organe de mise en forme 15.

Le circuit 16 effectue un comptage des impulsions 17 mises en forme qu'il reçoit, ainsi qu'une la linéarisation et l'étalonnage du capteur. L'étalonnage du capteur est effectué généralement en usine à l'aide d'une source de référence, par exemple une source de cobalt 60 quand le capteur est destiné à la détection du rayonnement gamma. La linéarisation est également effectuée en usine; elle consiste à transformer la réponse du capteur de manière telle que le nombre d'impulsions comptées soit proportionnel au nombre de millirems à détecter.

Le capteur 13 est, par exemple, du type de celui décrit dans la demande de brevet européen 175 369.

La sortie du circuit 16, qui constitue aussi la sortie de l'ensemble 12 de détection, est connectée à l'entrée d'un ensemble 18 de gestion des données.

Cet ensemble de gestion comprend un microprocesseur 19 avec une entrée $19_1$ reliée à la sortie du circuit 16 par l'intermédiaire d'un circuit interface 20.

Le microprocesseur 19 comporte, par ailleurs, des entrées-sorties $19_2$, $19_3$, $19_4$ et $19_5$.

L'entrée-sortie $19_2$ est connectée, par l'intermédiaire d'un circuit interface 21, à l'entrée-sortie 22 d'un ensemble 23 de commande et d'affichage qui sera décrit plus loin.

L'entrée-sortie $19_3$ est reliée, par l'intermédiaire d'un circuit interface 24, à l'entrée-sortie 25 d'un ensemble 26 de couplage à des organes externes. Cet ensemble 26 sera également décrit plus loin.

L'entrée-sortie $19_4$ est connectée à un bloc de mémorisation 27 qui est destiné à stocker l'information sur l'identité de la personne à laquelle est affecté le dispositif et à enregistrer les mesures résultant des signaux fournis par l'ensemble 12. Ces mesures sont enregistrées avec une date fournie par une base de temps 28 à horloge connectée à l'entrée-sortie $19_5$.

L'ensemble 23 comporte un dispositif d'affichage 30 du type à cristaux liquides fournissant des informations sur la face principale 31 du dispositif 10 (figure 1). On trouve aussi, dans l'ensemble 23, une diode électroluminescente 32 qui est destinée à fournir un signal lumineux d'alarme quand le débit de dose dépasse une limite prescrite ou quand la dose accumulée pendant un temps déterminé dépasse des valeurs admissibles. Ces informations d'alarme apparaissent également sous forme sonore grâce à un bruiteur 33.

L'ensemble 23 comporte aussi des organes 34 d'interrogation ou d'introduction de données. Ces organes 34 seront décrits plus loin en relation avec la figure 1.

L'ensemble 26 de couplage permet de recevoir des informations de l'extérieur par l'intermédiaire d'une antenne de déception 35 qui est reliée à l'entrée-sortie 25 par l'intermédiaire d'un circuit de réception 36 et d'un commutateur 37 permettant de positionner l'ensemble 26 soit en réception, soit en émission.

Pour émettre des informations vers un système extérieur, l'ensemble 26 comporte, en outre, une antenne d'émission 40 reliée à l'entrée-sortie 25 par l'intermédiaire d'un circuit d'émission 41 et du commutateur 37.

L'ensemble 26 est par exemple du type le celui qu'on trouve dans le système "TADICARD" de la Société Tadiran (Israël).

En variante le couplage du dispositif 10 avec un système externe s'effectue par voie optique ou à l'aide de contacts électriques.

L'énergie électrique d'alimentation des circuits du dispositif 10 est obtenue à l'aide d'un ensemble 45 comprenant une cellule solaire 46, un accumulateur 47 chargé par la cellule 46 et qui attente un bloc 48 d'alimentation des divers éléments du dispositif.

Dans une réalisation l'alimentation du bloc 26 est effectuée par induction d'un courant dans une bobine plate (non représentée) provoquée par la présence d'un champ électromagnétique au voisinage de la carte.

Le clavier de commande 34 comporte trois touches 50, 51 et 52 (figure 1).

L'actionnement de la touche 50 détermine le mode de fonctionnement. Par exemple après une pression sur cette touche 50, le dispositif 30 affiche l'identité de l'utilisateur porteur du dispositif; après deux pressions est affichée la dose accumulée (en millirems) par le porteur au cours d'une période déterminée. Comme on le verra ci-après, cette période est déterminée par l'actionnement de la touche 51.

Après trois pressions sur la touche 50 le débit, ou flux, de particules détectées est affiché. Quatre pressions successives déterminent l'écart entre la dose reçue pendant ladite période prédéterminée et la dose admissible pendant cette période. Enfin cinq pressions successives commandent l'affichage de la date et permettent la mise à l'heure.

En variante, après la première pression un code est réclamé à l'utilisateur; celui-ci l'introduit dans le dispositif à l'aide d'un clavier (non représenté) numérique, alphabétique ou alphanumérique (comme dans une calculatrice ou une banque de données de poche). Ensuite ce code est validé par une pression sur la touche 52. Si le code est inexact l'affichage d'informations n'est pas possible.

La seconde touche 51, dite touche de défilement, commande l'affichage des diverses catégories de chaque mode. Par exemple quand, grâce à deux pressions sur la touche 50, la dose a été affichée, la première pression sur la touche 51 de défilement indique la dose accumulée au cours de la dernière heure, après la seconde pression c'est la dose accumulée depuis 24 heures qui est affichée, après trois pressions s'affiche la dose accumulée depuis une semaine; suite à quatre pressions apparaît la dose accumulée depuis un mois et après cinq pressions on affiche la dose accumulée dans l'année. Il est possible, avec six pressions, d'afficher la dose totale accumulée par le porteur depuis qu'on a enregistré les rayonnements auxquels il est soumis.

La troisième touche 52 permet de prendre en compte ou valider le paramètre affiché. Cette touche est utile notamment pour la mise à l'heure et pour la validation d'un code comme expliqué ci-dessus.

La face apparente du dispositif 10 comporte, en plus de l'afficheur à cristaux liquides 30, des cellules solaires 46, du tableau de commande 34 et du bruiteur 33, un espace 60 avec l'identité du porteur et un espace 61 pour la photographie de ce dernier.

Bien entendu l'alimentation en énergie électrique n'est pas limitée à celle qui a été décrite. A la place d'un accumulateur on peut prévoir une pile ou un accumulateur rechargeable par le réseau.

Dans la mémoire 27 de l'ensemble 18 on peut stocker non seulement une information relative à l'identité du porteur mais également des informations médicales à son sujet telles que son groupe sanguin ou ses maladies antérieures. De cette manière en cas de crise ou d'accident, les organismes de secours disposent d'une information utile pour optimiser les soins à apporter au porteur. Ces informations sont accessibles soit directement grâce au clavier 34, soit seulement par l'intermédiaire de l'antenne 40 ou d'un dispositif de connexion analogue.

Lorsque le dispositif portable est remis à son titulaire, l'organisme chargé de cette délivrance inscrit dans la mémoire 27 les informations suivantes : identité de l'attributaire avec ses nom, prénoms, âge, nationalité le cas échéant, ses caractéristiques médicales comme indiqué ci-dessus, des informations relatives à son emploi, et enfin, et surtout, les doses précédemment accumulées avec les doses maximales admissibles, celles-ci pouvant varier d'un individu à un autre, notamment en fonction de son âge.

En outre par l'ensemble 26, les données dans la mémoire 27 sont actualisables.

Au cours de son fonctionnement habituel, le dispositif permet l'enregistrement des doses au cours de périodes prédéterminées : heure, jour, semaine, mois, trimestre, année, etc,.. ; il peut aussi enregistrer la courbe de variation des débits de dose en fonction de la date.

Dans une réalisation les informations de doses, de débit de doses sont associées non seulement à la date mais également au lieu où se trouve le porteur. Ces informations de lieu sont, par exemple, communiquées de façon automatique au dispositif par l'antenne 35 réceptrice.

Dans une réalisation les informations stockées dans la mémoire 27 sont cryptées de façon différenciée, notamment afin que l'accès aux informations par le système externe ne puisse être effectué que par les personnes ou organismes autorisés. Par exemple les informations médicales seront cryptées d'une première manière et les informations relatives à l'emploi exercé seront cryptées d'une seconde manière afin que les informations médicales ne soient accessibles qu'à un service médical et les informations relatives à l'emploi ne soient accessibles qu'à un autre service autorisé.

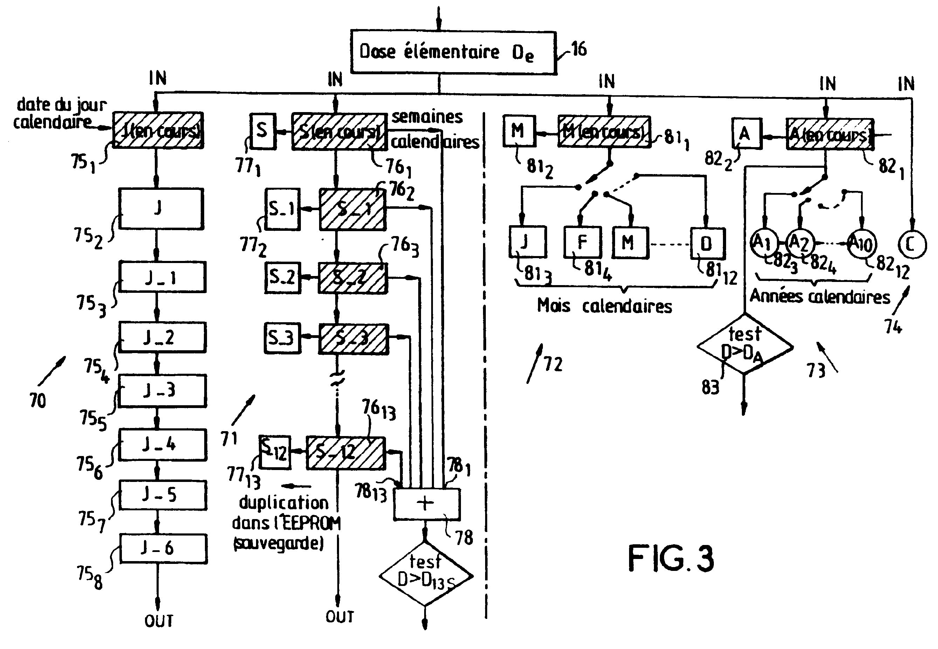

On va maintenant décrire avec la figure 3 un exemple d'organisation des mémoires 27 des circuits de la figure 2.

Dans cet exemple on prévoit quatre ensembles de mémoires, un ensemble 70 d'enregistrement et de stockage de doses journalières, un ensemble 71 d'enregistrement et de stockage de données hebdomadaires, un ensemble 72 d'enregistrement et de stockage de données mensuelles, et un ensemble 73 d'enregistrement et de stockage de données annuelles. On prévoit enfin une mémoire 74 de cumul général des doses reçues par l'individu auquel est affecté le badge.

L'ensemble 70 comprend, d'une part, une mémoire vive RAM $75_1$ qui enregistre chaque jour calendaire, sous forme d'un nombre binaire, le nombre de doses élémentaires de 10 microrems reçues du circuit 16.

Le contenu de la mémoire $75_1$ est remis à zéro toutes les vingt-quatre heures, par exemple à 0 heure.

Cette mémoire $75_1$ est connectée à une mémoire $75_2$ de type EEPROM. Une mémoire de ce type, contrairement à une mémoire RAM, ne necessite pas d'alimentation en énergie électrique pour conserver les données. De ce point de vue elle est donc analogue à une mémoire morte; toutefois elle est effaçable à l'aide d'un signal électrique et après l'effacement elle est disponible pour un nouvel enregistrement ou stockage de données.

La connexion de la mémoire RAM $75_1$ à la mémoire EEPROM $75_2$ est telle que la mémoire $75_1$ déverse en permanence son contenu dans la mémoire $75_2$.

La mémoire $75_2$ est suivie par des mémoires $75_3$, $75_4$, $75_5$, $75_6$, $75_7$ et $75_8$, toutes de type EEPROM. Les mémoires $75_2$ à $75_8$ sont connectées en série de façon telle que toutes les vingt-quatre heures, par exemple à 0 heure, le contenu d'une mémoire EEPROM soit déversé dans la mémoire suivante. Autrement dit le contenu de la mémoire $75_2$ est versé dans la mémoire $75_3$, le contenu de la mémoire $75_3$ est versé dans la mémoire $75_4$, etc... Bien entendu ces opérations s'effectuent sous le contrôle du microprocesseur afin que chaque mémoire EEPROM déverse d'abord son contenu dans la mémoire vive du microprocesseur avant d'être effacée et que le microprocesseur alimente ensuite la mémoire suivante.

Au cours de ce processus le contenu de la dernière mémoire, $75_8$, est effacé sans être récupéré.

Ainsi la mémoire $75_2$ contient la dose accumulée au cours du jour calendaire actuel et les mémoires $75_3$ à $75_8$ contiennent les doses accumulées au cours des jours précédents : J-1, J-2... J-6.

L'ensemble 71 comporte une mémoire vive RAM $76_1$ analogue à la mémoire $75_1$. Elle est remise à zéro chaque semaine calendaire, c'est-à-dire tous les sept jours. Cette mémoire vive est connectée à une autre mémoire vive $76_2$. Le contenu de la mémoire $76_1$ est versé dans la mémoire $76_2$ une fois par semaine à date fixe. De même on prévoit en série douze autres mémoires vives $73_3$ à $73_{13}$. Le contenu de chaque mémoire vive est versé dans la mémoire suivante chaque semaine à date fixe. Ainsi la mémoire $76_1$ contient la dose accumulée depuis le début de la semaine S en cours, la mémoire $76_2$ stocke la dose accumulée au cours de la semaine (S - 1) qui précède, la mémoire $76_3$ contient la dose accumulée au cours de la semaine S - 2 et ainsi de suite jusqu' à la mémoire vive $76_{13}$ qui contient la dose accumulée au cours de la semaine S - 12.

Au cours de la mise à jour le contenu de la dernière mémoire $76_{13}$ est perdu.

Par ailleurs à chacune des mémoires $76_1$, $76_2$... $76_{13}$ est associée une mémoire EEPROM $77_1$... $77_{13}$ de contenu identique à celui de la mémoire RAM associée. Ces mémoires constituent des sauvegardes du contenu des mémoires RAM 76.

Le contenu de chaque mémoire vive $76_1$, $76_2$... $76_{13}$ est appliqué à une entrée correspondante $78_1$... $78_{13}$ d'un additionneur 78 qui effectue en permanence la somme des doses accumulées dans ces treize mémoires. Si cette dose dépasse un seuil $D_{13S}$ une alarme se déclenche.

On aurait pu envisager, pour l'ensemble 71, une structure analogue à celle de l'ensemble 70 sans duplication des mémoires. Toutefois la présence de mémoires vives est préférable pour permettre la connexion à l'additionneur 78.

L'ensemble 72 comporte une mémoire vive $81_1$ qui enregistre les doses accumulées au cours du mois M en cours. Cette mémoire RAM $81_1$ est connectée à une mémoire EEPROM $81_2$ de façon telle qu'à chaque instant le contenu de la mémoire $81_2$

soit identique à celui de la mémoire $81_1$.

En outre l'ensemble 72 comporte douze autres mémoires EEPROM $81_3$ à $81_{14}$ qui correspondent aux douze mois de l'année : Janvier, Février... Décembre.

A la fin de chaque mois calendaire, le contenu de la mémoire $81_1$ est versé dans celle des mémoires EEPROM, $81_3$ à $81_{14}$, qui est affectée au mois qui vient de s'écouler. Ensuite le contenu des mémoires $81_1$ et $81_2$ est mis à zéro.

A la fin de chaque année calendaire les contenus des mémoires $81_3$ à $81_{14}$ sont mis à zéro.

L'ensemble de mémoires 73 comporte une mémoire $82_1$ RAM qui accumule les doses de l'année A en cours. A cette mémoire vive $82_1$ est associée une mémoire EEPROM $82_2$ de contenu identique à celui de la mémoire $82_1$ et on prévoit dix mémoires EEPROM $82_3$ à $82_{12}$ dont chacune est affectée au stockage des doses accumulées au cours d'une année antérieure. Ainsi la mémoire $82_3$ contient la dose accumulée au cours de l'année calendaire $A_1$ qui précède et ainsi de suite jusqu'à la mémoire $82_{12}$ qui contient la dose accumulée l'année précédant l'année en cours.

La mémoire $82_3$ est connectée à la mémoire $82_4$ de façon telle qu'à la fin de chaque année calendaire le contenu de cette mémoire $82_3$ soit versé dans la mémoire $82_4$ et ainsi de suite : le contenu de la mémoire $82_{11}$ est versé dans la mémoire $82_{12}$ et le contenu de cette dernière est perdu.

Par ailleurs la sortie de la mémoire $82_1$ est connectée à l'entrée d'un comparateur 83 afin de comparer en permanence la dose accumulée au cours de l'année en cours avec la dose annuelle maximale admissible $D_A$.

En variante il n'existe pas de connexion entre les mémoires $82_3$, $82_4$... $82_{12}$ et à la fin de la première année calendaire d'utilisation du dispositif le contenu de la mémoire $82_1$ est versé dans la mémoire EPROM $82_{12}$. L'année suivante le contenu de la mémoire $82_1$ est versé dans la mémoire $82_{11}$, etc...

La mémoire 74 est du type EEPROM. Elle contient la dose accumulée au cours de l'existence ou la carrière professionnelle de la personne titulaire du dispositif.

Le microprocesseur est programmé pour qu'à l'initialisation les diverses mémoires de type EEPROM puissent être chargées à une valeur donnée d'origine. De cette manière quand le titulaire reçoit un nouveau badge, celui-ci est chargé avec toutes les informations dosimétriques concernant cette personne.

On notera que les informations appliquées à l'entrée de l'additionneur 78 contiennent à la fois des informations de dose et des informations de date. De même à l'entrée du comparateur 83 on associe une donnée de dose à une donnée de date. Cette disposition permet, quand il se produit un dépassement du seuil $D_{13S}$ ou $D_A$, de mémoriser ce dépassement avec sa date.

Dans chaque mémoire on enregistre un couple de données : une dose et une date. Si chaque dose est codée sur 16 bits et chaque date codée également sur 16 bits le volume de mémoire EEPROM nécessaire est :

$$32 \times (7 + 13 + 12 + 10) \simeq 1,3.10^3 \text{ bits.}$$

Ce volume de mémoire EEPROM est ainsi relativement faible. Le volume de mémoire RAM est encore plus faible.

Dans un exemple le dispositif présente des contacts lui permettant d'être connecté à un MODEM téléphonique. De cette manière quand le titulaire est éloigné du centre de gestion ou de surveillance, il peut transmettre les informations que contient le dispositif par les lignes téléphoniques.

## Revendications

1. Dispositif portatif de mesure de débit de doses et de doses de rayonnement photonique gamma, UV ou X, ou de particules chargées auquel est soumis un porteur, comprenant un détecteur (13) de tels rayonnements ou particules, un moyen de calcul de la dose accumulée, une mémoire (27) pour stocker des données relatives au porteur et les doses accumulées, et une horloge-calendrier (28) pour stocker dans la mémoire (27) une information de date en même temps que les informations de doses et/ou de débits de dose, avec un microprocesseur (19) pour gérer les enregistrements dans la mémoire et, le cas échéant, l'affichage et l'interrogation, la gestion des enregistrements dans la mémoire (27) étant telle que les données en mémoire sont constamment ou périodiquement remises à jour, caractérisé en ce que la remise à jour des enregistrements comporte la mise en mémoire de doses accumulées sur des périodes courtes de date récente et de doses accumulées sur des périodes plus longues et de dates plus anciennes, et l'effacement d'informations de doses cumulées sur les périodes courtes lorsque ces périodes deviennent plus anciennes, de manière à ne conserver dans la mémoire que des informations de doses cumulées sur un nombre limité de périodes de temps, l'étendue de chaque période étant d'autant plus importante que sa date est plus ancienne.

2. Dispositif selon la revendication 1, caractérisé en ce que la mémoire contient des informations de doses journalières pour les périodes plus récentes, de doses hebdomadaires pour les périodes immédiatement antérieures, de doses mensuelles pour un certain nombre de périodes précédant les périodes hebdomadaires, et de doses annuelles pour les périodes les plus anciennes.

3. Dispositif selon l'une quelconque des revendications 1 et 2, caractérisé en ce que tous ses éléments constitutifs sont logés dans un boîtier plat d'un seul tenant en forme de carte de crédit rectangulaire de dimensions normalisées.

4. Dispositif selon la revendication, caractérisé en ce qu'il comporte sur sa face principale (31) des informations lisibles (60, 61) relatives au porteur.

5. Dispositif selon l'une quelconque des revendications précédentes, caractérisé en ce qu'il comporte des moyens (26) de connexion à un système d'introduction de données et/ou de traitement d'informations.

6. Dispositif selon la revendication 5, caractérisé en ce que le moyen de connexion (26) comporte une antenne, par exemple de type étiquette radio.

7. Dispositif selon la revendication 5 ou 6, caractérisé en ce qu'il comporte des moyens pour introduire dans la mémoire (27) des informations représentant le lieu où se trouve le porteur.

8. Dispositif selon l'une quelconque des revendications précédentes, caractérisé en ce qu'il comporte un dispositif d'affichage (30) des doses accumulées et/ou du débit de doses et des moyens (34) de sélection manuelle de l'information à afficher.

9. Dispositif selon l'une quelconque des revendications précédentes, caractérisé en ce qu'il comporte une alarme (32, 33) pour informer le porteur que le débit de doses dépasse une limite prescrite et/ou que la dose accumulée pendant un temps donné dépasse une limite prédéterminée.

10. Dispositif selon l'une quelconque des revendications précédentes, caractérisé en ce qu'il comporte des moyens pour mémoriser des dépassements de doses accumulées par rapport à une ou plusieurs limites prédéterminées, ces dépassements étant enregistrés avec leurs dates.

11. Dispositif selon l'une quelconque des revendications précédentes, caractérisé en ce que le porteur étant une personne, les informations relatives à cette personne stockées dans ladite mémoire (27) se rapportent à son identité.

12. Dispositif selon la revendication 11, caractérisé en ce que les informations stockées dans la mémoire (27) comprennent, en plus, des données médicales relatives au porteur.

13. Dispositif selon l'une quelconque des revendications précédentes, caractérisé en ce qu'il comporte un capteur (13) à état solide.

14. Dispositif selon l'une quelconque des revendications précédentes, caractérisé en ce qu'il comporte une source (45) d'alimentation en énergie électrique.

15. Dispositif selon l'une quelconque des revendications 1 à 11, caractérisé en ce que le porteur est un objet, tel qu'un conteneur contenant des substances émettrices de rayonnements photoniques gamma, X ou ultraviolets ou de particules chargées.

16. Dispositif portatif de mesure de débit de doses et de doses de rayonnement photonique gamma, UV ou X, ou de particules chargées auquel est soumis un lieu, comprenant un détecteur (13) de tels rayonnements ou particules, un moyen de calcul de la dose accumulée, une mémoire (27) pour stocker des données relatives au lieu et les doses accumulées, et une horloge-calendrier pour stocker dans la mémoire (27) une information de date en même temps que les informations de doses et/ou de débits de dose, le dispositif comportant un microprocesseur (19) pour gérer les enregistrements dans la mémoire et, le cas échéant, l'affichage et l'interrogation, et la gestion des enregistrements dans la mémoire (27) étant telle que les données en mémoire sont constamment ou périodiquement remises à jour, caractérisé en ce que la remise à jour des enregistrements comporte la mise en mémoire de doses accumulées sur des périodes courtes de date récente et de doses accumulées sur des périodes plus longues et de dates plus anciennes, et l'effacement d'informations de doses cumulées sur les périodes courtes lorsque ces périodes deviennent plus anciennes, de manière à ne conserver dans la mémoire que des informations de doses cumulées sur un nombre limité de périodes de temps, l'étendue de chaque période étant d'autant plus importante que sa date est plus ancienne.

**Patentansprüche**

1. Tragbare Vorrichtung zum Messen einer Dosisrate und von Dosen einer Gamma-, UV- oder Röntgenphotonenstrahlung oder von geladenen Teilen, denen ein Träger ausgesetzt ist, mit einem Detektor (13) für solche Strahlungen oder Teilchen, einem Rechenmittel für die akkumulierte Dosis, einem Speicher (27) zum Speichern von den Träger betreffenden Daten und der akkumulierten Dosen sowie einer Kalenderuhr (28) zum Speichern einer Datumainformation gleichzeitig mit den Informationen zu Dosen und/oder Dosisraten in dem Speicher (27), mit einem Mikroprozessor (19) zur Verwaltung der Aufzeichnungen in dem Speicher gegebenenfalls zur Anzeige und Abfrage, wobei die Aufzeichnungen in dem Speicher (27) so verwaltet werden, daß die Daten im Speicher ständig oder periodisch reaktualisiert werden, dadurch gekennzeichnet, daß die Reaktualisierung der Aufzeichnung das Speichern von über kurze Perioden jüngeren Datums akkumulierten Dosen sowie von über längere Perioden mit weiter zurückliegendem Datum akkumulierten Dosen und das Löschen von Informationen zu über die kurzen Perioden akkumulierten Dosen beinhaltet, wenn diese Perioden weiter zurückliegend werden, so daß in dem Speicher nur Informationen zu über eine begrenzte Anzahl von Zeitperioden kumulierten Dosen aufbewahrt werden, wobei die Dauer jeder Periode um so länger ist, je weiter ihr Datum zurückliegt.

2. Vorrichtung nach Anspruch 1, dadurch gekennzeichnet, daß der Speicher Informationen über tägliche Dosen für die jüngeren Perioden, über wöchentliche Dosen für die unmittelbar früheren Perioden und zu monatlichen Dosen für eine bestimmte Anzahl von Perioden, die den wöchentlichen Perioden vorausgehen, sowie zu jährlichen Dosen für die am weitesten zurückliegenden Perioden enthält.

3. Vorrichtung nach einem der Ansprüche 1 und 2, dadurch gekennzeichnet, daß alle ihre Bestandteile in einem flachen Gehäuse aus einem Stück in Form einer rechteckigen Kreditkarte mit standardisierten Abmessungen aufgenommen sind.

4. Vorrichtung nach Anspruch 3, dadurch gekennzeichnet, daß sie an ihrer Hauptseite (31) lesbare Informationen (60, 61) über den Träger aufweist.

5. Vorrichtung nach einem der vorhergehenden Ansprüche, dadurch gekennzeichnet, daß sie Mittel (26) zum Anschluß an ein System zur Eingabe von Daten und/oder zur Verarbeitung von Informationen aufweist.

6. Vorrichung nach Anspruch 5, dadurch gekennzeichnet, daß das Anschlußmittel (26) eine Antenne, z. B. nach Art einer Funkmarke aufweisen.

7. Vorrichtung nach Anspruch 5 oder 6, dadurch gekennzeichnet, daß sie Mittel zur Eingabe von Informationen in den Speicher (27) aufweist, die den Ort angeben, an dem sich der Träger befindet.

8. Vorrichtung nach einem der vorhergehenden Ansprüche, dadurch gekennzeichnet, daß sie eine Anzeigeeinrichtung (30) für die akkumulierten Dosen und/oder die Dosierate sowie Mittel (34) zur manuellen Auswahl der anzuzeigenden Information aufweist.

9. Vorrichtung nach einem der vorhergehenden Ansprüche, dadurch gekennzeichnet, daß sie einen Alarm (32, 33) aufweist, um den Träger darüber zu informieren, daß die Dosisrate einen vorgeschriebenen Grenzwert überschreitet und/oder die während einer gegebenen Zeit akkumulierte Dosis einen vorbestimmten Grenzwert überschreitet.

10. Vorrichtung nach einem der vorhergehenden Ansprüche, dadurch gekennzeichnet, daß sie Mittel zum Speichern der Überschreitungen akkumlierter Dosen bezüglich eines oder mehrerer vorbestimmter Grenzwerte aufweist, wobei diese Überschreitungen mit ihrem Datum gespeichert werden.

11. Vorrichtung nach einem der vorhergehenden Ansprüche, dadurch gekennzeichnet, daß, wenn der Träger eine Person ist, die bezüglich dieser Person in dem Speicher (27) gespeicherten Information sich auf seine Identität beziehen.

12. Vorrichtung nach Anspruch 11, dadurch gekennzeichnet, daß die in dem Speicher (27) gespeicherten Informationen ferner medizinische Daten bezüglich des Trägers enthalten.

13. Vorrichtung nach einem der vorhergehenden Ansprüche, dadurch gekennzeichnet, daß sie einen Festkörpersensor (13) aufweist.

14. Vorrichtung nach einem der vorhergehenden Ansprüche, dadurch gekennnzeichnet, daß sie eine elektrische Energieversorgungsquelle (45) aufweist.

15. Vorrichtung nach einem der Ansprüche 1 bis 11, dadurch gekennzeichnet, daß der Träger ein Objekt wie ein Behälter ist, der Stoffe enthält, die Gamma-, Röntgen- oder UV-Photonenstrahlungen oder geladene Teilchen emittieren.

16. Tragbare Vorrichtung zum Messen der Dosisrate und von Dosen einer Gamma-, UV- oder Röntgenphotonenstrahlung oder von geladenen Teilchen, denen ein Ort ausgesetzt ist, mit einem Detektor (13) für solche Strahlungen oder Teilchen, einein Rechenmittel für die akkumulierte Dosis, einem Speicher (27) zum Speichern von den Ort betreffenden Daten und der akkumulierten Dosen sowie einer Kalenderuhr zum Speichern einer Datumsinformation gleichzeitig mit den Informationen zu Dosen und/oder Dosisraten in dem Speicher (27), wobei die Vorrichtung einen Mikroprozessor (19) zur Verwaltung der Aufzeichnungen in dem Speicher und gegebenenfalls zur Anzeige und Abfrage aufweist, und wobei die Aufzeichnungen in dem Speicher (27) so verwaltet werden, daß die Daten im Speicher ständig oder periodisch reaktualisiert werden, dadurch gekennzeichnet, daß die Reaktualisierung der Aufzeichnung das Speichern von über kurze Perioden jüngeren Datums akkumulierten Dosen sowie von über längere Perioden mit weiter zurückliegendem Datum akkumulierten Dosen und das Löschen von Informationen zu über die kurzen Perioden kumulierten Dosen beinhaltet, wenn diese Perioden weiter zurückliegend werden, so daß in dem Speicher nur informationen zu über eine begrenzte Anzahl von Zeitperioden kumulierten Dosen aufbewahrt werden, wobei die Dauer jeder Periode um so länger ist, je weiter ihr Datum zurückliegt.

**Claims**

1. Portable device for measuring dose rate and doses of gamma, UV or X photon radiation, or of charged particles to which a carrier is subjected, comprising a detector (13) of such radiation or particles, a means of calculating the accumulated dose, a memory (27) for storing data relating to the carrier and the accumulated doses, and a clock-calendar (28) for storing date information in the memory (27) at the same time as the dose and/or dose-rate information, with a microprocessor (19) for managing the recordings in the memory and, if appropriate, the display and the interrogation, the management of the recordings in the memory (27) being such that the data in memory are continuously or periodically updated, characterized in that the updating of the recordings includes the memory-storage of doses accumulated over short periods of recent date and of doses accumulated over longer periods and of earlier dates, and the erasing of dose information gathered over the short periods when these periods become older, in such a way as to keep in the memory only dose information gathered over a limited number of time periods, the span of each period being all the longer as its date is older.

2. Device according to Claim 1, characterized in that the memory contains daily dose information for the most recent periods, weekly dose information for the immediately preceding periods, monthly dose information for a certain number of periods preceding the weekly periods, and annual dose information for the earliest periods.

3. Device according to either of Claims 1 or 2, characterized in that all its constituent elements are housed in a flat single-piece case in the shape of a rectangular credit card of standardized dimensions.

4. Device according to Claim 1, characterized in that, on its main face (31) it includes legible information (60, 61) relating to the carrier.

5. Device according to any one of the preceding claims, characterized in that it includes means (26) for connection to a data input and/or information processing system.

6. Device according to Claim 5, characterized in that the connection means (26) include an antenna, of radio-label type for example.

7. Device according to Claim 5 or 6, characterized in that it includes means for inputting, into the memory (27), information representing the location of the carrier.

8. Device according to any one of the preceding claims, characterized in that it includes a device (30) for displaying the accumulated doses and/or the dose rate and means (34) for manual selection of the information to be displayed.

9. Device according to any one of the preceding claims, characterized in that it includes an alarm (32, 33) for informing the carrier that the dose rate is exceeding a prescribed limit and/or that the dose accumulated over a given time is exceeding a predetermined limit.

10. Device according to any one of the preceding claims, characterized in that it includes means for memory storage of excesses of accumulated doses with respect to one or more predetermined limits, these excesses being recorded with their dates.

11. Device according to any one of the preceding claims, characterized in that, with the carrier being a person, the information relating to this person stored in the said memory (27) relates to his or her identity.

12. Device according to Claim 11, characterized in that the information stored in the memory (27) further comprises medical data relating to the carrier.

13. Device according to any one of the preceding claims, characterized in that it includes a solid-state sensor (13).

14. Device according to any one of the preceding claims, characterized in that it includes an electrical energy power supply source (45).

15. Device according to any one of Claims 1 to 11, characterized in that the carrier is an object, such as a container containing substances emitting gamma, X or ultraviolet photon radiations or charged particles.

16. Portable device for measuring dose rate and doses of gamma, UV or X photon radiation, or of charged particles to which a place is subjected, comprising a detector (13) of such radiation or particles, a means of calculating the accumulated dose, a memory (27) for storing data relating to the place and the accumulated doses, and a clock-calendar for storing date information in the memory (27) at the same time as the dose and/or dose-rate information, the device including a microprocessor (19) for managing the recordings in the memory and, if appropriate, the display and the interrogation, and the management of the recordings in the memory (27) being such that the data in memory are continuously or periodically updated, characterized in that the updating of the recordings includes the memory-storage of doses accumulated over short periods of recent date and of doses accumulated over longer periods and of earlier dates, and the erasing of dose information gathered over the short periods when these periods become older, in such a way as to keep in the memory only dose information gathered over a limited number of time periods, the span of each period being all the longer as its date is older.

**FIG.1**

**FIG.2**

Energie — 45
- Alimentation — 48
- Batterie — 47
- Cellule solaire — 46

Senseur — 12
- Capteur — 13
- Prétraitement (Mise en forme) — 15, 17
- Traitement — 16
  - Comptage
  - Compensation
  - Etalonnage

μP GESTION — 19
- Interface senseur — $19_1$, 20
- Interface visu/com — $19_2$, 21
- Interface système — $19_3$, 24, 25
- $19_4$
- $19_5$
- 18

Mémorisation — 27
- Stockage
- Enregistrement

Base de temps — 28
- Horloge
- Date

Visualisation/Commande — 23
- Afficheur C.L. — 30
- Afficheur D.E.L. — 32
- Commandes manu. — 34
- Alarme sonore — 33
- 22

COUPLAGE SYSTEME EXTERNE — 26
- Emetteur — 40
- Antenne — 40
- Récepteur — 36
- Antenne — 35
- 41, 37

13

Dose élémentaire $D_e$ — 16

IN    IN    IN    IN    IN

date du jour calendaire

J (en cours)    $75_1$

S    S (en cours)    semaines calendaires    $77_1$    $76_1$

M    M (en cours)    $81_1$    $81_2$

A    A (en cours)    $82_2$    $82_1$

J    $75_2$

S-1    S-1    $76_2$    $77_2$

J-1    $75_3$

S-2    S-2    $76_3$

J-2    $75_4$

S-3    S-3

$75_5$

J-3

$75_6$

J-4

$75_7$

J-5

$75_8$

J-6

70

71

S-12    S-12    $76_{13}$    $77_{13}$

duplication dans l'EEPROM (sauvegarde)

$78_1$

$78_{13}$

+    78

test $D > D_{13S}$

OUT    OUT

J    F    M    ......    D    $81_3$    $81_4$    $81_{12}$

Mois calendaires

72

$A_1$    $A_2$    ...    $A_{10}$    C    $82_3$    $82_4$    $82_{12}$

Années calendaires    74

test $D > D_A$    73    83

FIG.3

14